# EUROPEAN PATENT APPLICATION

(11) **EP 4 123 516 A1**
(43) Date of publication of application: **25.01.2023**
(21) Application number: 22184865.8
(22) Date of filing: 14.07.2022
(51) Int. Cl.: G06N 3/08

(54) **METHOD AND APPARATUS FOR ACQUIRING PRE-TRAINED MODEL, ELECTRONIC DEVICE AND STORAGE MEDIUM**

(30) Priority: 19.07.2021 CN 202110813275
(71) Applicant: BEIJING BAIDU NETCOM SCIENCE AND TECHNOLOGY CO. LTD., 100085 Beijing (CN)
(72) Inventor: JIANG, Wenbin, Beijing, 100085 (CN); FENG, Zhifan, Beijing, 100085 (CN); FENG, Xinwei, Beijing, 100085 (CN); LYU, Yajuan, Beijing, 100085 (CN); ZHU, Yong, Beijing, 100085 (CN)
(74) Representative: dompatent von Kreisler Selting Werner - Partnerschaft von Patent- und Rechtsanwälten mbB

(57) **Abstract**

The present disclosure provides a method and apparatus for acquiring a pre-trained model, an electronic device and a storage medium, and relates to the fields such as deep learning, natural language processing, knowledge graph and intelligent voice. The method may include: acquiring a pre-training task set composed of M pre-training tasks, M being a positive integer greater than 1, the pre-training tasks including: N question-answering tasks corresponding to different question-answering forms, N being a positive integer greater than 1 and less than or equal to M; and jointly pre-training the pre-trained model according to the M pre-training tasks. By use of the solutions of the present disclosure, resource consumption may be reduced, and time costs may be saved.

## Description

### Field of the Disclosure

The present disclosure relates to the field of artificial intelligence technologies, and in particular, to a method and apparatus for acquiring a pre-trained model, an electronic device and a storage medium in the fields such as deep learning, natural language processing, knowledge graph and intelligent voice.

### Background of the Disclosure

Question-answering is a more advanced form of information acquisition than retrieval, which can directly provide answers to users' questions. Different from other natural language processing tasks, question-answering simultaneously involves questions, data sources and inference calculation between the two. According to different data sources, a variety of question-answering forms such as text question-answering, knowledge-based question-answering, table question-answering, image question-answering and video question-answering may be included.

In recent years, pre-trained models have been widely used, and have also been correspondingly applied to question-answering tasks. For example, the corresponding pre-trained models may be trained respectively for different question-answering forms. However, the pre-trained model obtained in this manner are only applicable to specific question-answering forms and do not have universal applicability. In addition, there is a need to train the corresponding pre-trained model respectively for different question-answering forms, thereby consuming a lot of resources and time costs.

### Summary of the Disclosure

The present disclosure provides a method and apparatus for acquiring a pre-trained model, an electronic device and a storage medium.

A method for acquiring a pre-trained model, including:
acquiring a pre-training task set composed of M pre-training tasks, M being a positive integer greater than 1, the pre-training tasks including: N question-answering tasks corresponding to different question-answering forms, N being a positive integer greater than 1 and less than or equal to M; and
jointly pre-training the pre-trained model according to the M pre-training tasks.

An apparatus for acquiring a pre-trained model, the apparatus including: an acquisition module and a training module;
the acquisition module being configured to acquire a pre-training task set composed of M pre-training tasks, M being a positive integer greater than 1, the pre-training tasks including: N question-answering tasks corresponding to different question-answering forms, N being a positive integer greater than 1 and less than or equal to M; and
the training module being configured to jointly pre-train the pre-trained model according to the M pre-training tasks.

An electronic device, including:
at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, including a computer program, wherein, when the computer program is executed by a processor, the method as described above is performed.

One embodiment in the above disclosure has the following advantages or beneficial effects. A plurality of different question-answering forms are pre-trained in a same framework, that is, joint pre-training of different question-answering forms is realized, so that a pre-trained model applied to different question-answering forms can be obtained, thereby reducing resource consumption and saving time costs.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a flowchart of an embodiment of a method for acquiring a pre-trained model according to the present disclosure;
FIG. 2 is a schematic diagram of a pre-training architecture of the pre-trained model according to the present disclosure;
FIG. 3 is a schematic diagram of a component structure of an embodiment of an apparatus 300 for acquiring a pre-trained model according to the present disclosure; and
FIG. 4 is a schematic block diagram of an electronic device 400 configured to implement embodiments of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it is to be understood that the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

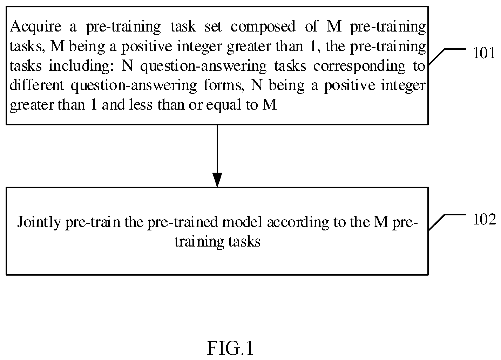

FIG. 1 is a flowchart of an embodiment of a method for acquiring a pre-trained model according to the present disclosure. As shown in FIG. 1, the following specific implementations are included.

In step 101, a pre-training task set composed of M pre-training tasks is acquired, M being a positive integer greater than 1, the pre-training tasks including: N question-answering tasks corresponding to different question-answering forms, N being a positive integer greater than 1 and less than or equal to M.

In step 102, the pre-trained model is jointly pre-trained according to the M pre-training tasks.

As can be seen, in the solution of the above method embodiment, a plurality of different question-answering forms may be pre-trained in a same framework, that is, joint pre-training of different question-answering forms is realized, so that a pre-trained model applied to different question-answering forms can be obtained, thereby reducing resource consumption and saving time costs.

Although data sources of different question-answering forms are different, they have common characteristics in aspects such as the understanding of questions and data sources as well as inference calculation. Therefore, joint pre-training of different question-answering forms may be performed to obtain a pre-trained model suitable for different question-answering forms. In addition, for some question-answering forms, such as video question-answering, it is generally difficult to acquire enough training samples, so a question-answering effect of a corresponding pre-trained model obtained in an existing method is generally poor. However, after the method according to the present disclosure is used, knowledge transfer may be realized by joint pre-training, so that question-answering effects of the question-answering forms with insufficient training samples can be improved by using the question-answering forms with abundant training samples.

The specific type of the pre-trained model is not limited.

In order to pre-train the pre-trained model, a pre-training task set composed of M pre-training tasks may be acquired first, M being a positive integer greater than 1. The pre-training tasks include: N question-answering tasks corresponding to different question-answering forms, N being a positive integer greater than 1 and less than or equal to M.

Specific values of M and N may be determined according to actual requirements. If N is equal to M, it indicates that the pre-training task set includes only N question-answering tasks. If N is less than M, it indicates that the pre-training task set includes at least one other tasks in addition to the N question-answering tasks.

For example, the value of N may be 5. Correspondingly, 5 question-answering tasks may include: a text question-answering task, a knowledge-based question-answering task, a table question-answering task, an image question-answering task and a video question-answering task.

In one embodiment of the present disclosure, the pre-training task set may include: a question-answering pre-training task subset; and the question-answering pre-training task subset may include: the N question-answering tasks, and may further include one or any combination of the following: a task of judging matching between a question and a data source, a task of detecting a part related to the question in the data source, and a task of judging validity of the question and/or the data source.

As can be seen, the tasks in the question-answering pre-training task subset are all question-answering-related pre-training tasks. The task of judging matching between a question and a data source is configured to judge whether a given data source such as a text, a knowledge graph, a table, an image, or a video can answer a given question. The task of detecting a part related to the question in the data source is configured to identify a part that can answer the question in a given data source. The task of judging validity of the question and/or the data source is configured to judge whether a given question is a valid information acquisition question, and/or judge whether a given data source can support an information acquisition question.

The pre-trained model is jointly pre-trained further in combination with the task of judging matching between a question and a data source, the task of detecting a part related to the question in the data source, and the task of judging validity of the question and/or the data source, so that the obtained pre-trained model can better handle the question-answering tasks, thereby improving the question-answering effect.

In one embodiment of the present disclosure, the pre-training task set may further include one or all of the following: a single-mode pre-training task subset and a multi-mode pre-training task subset. The single-mode pre-training task subset may include: P different single-mode pre-training tasks, P being a positive integer; and the multi-mode pre-training task subset may include: Q different multi-mode pre-training tasks, Q being a positive integer. Specific values of P and Q may be determined according to actual requirements.

The single-mode pre-training task and the multi-mode pre-training task generally refer to common pre-training tasks in the existing pre-training work. Specific single-mode pre-training tasks and/or multi-mode pre-training tasks may be determined according to actual requirements. For example, the single-mode pre-training task may be "predict occluded columns according to reserved columns" or the like, and the multi-mode pre-training task may be "whether a text matches a video" or the like.

The single-mode pre-training task and the multi-mode pre-training task can provide assistance for the understanding of questions and data sources and help to achieve a better pre-training effect.

The pre-trained model may be pre-trained based on the pre-training task set. In the method of the present disclosure, a learning process of the pre-trained model may be performed asynchronously.

In one embodiment of the present disclosure, the following processing may be performed respectively in each round of training: determining the pre-training task corresponding to the round of training as a current pre-training task; acquiring a loss function corresponding to the current pre-training task; and updating model parameters corresponding to the current pre-training task according to the loss function; wherein each of the M pre-training tasks is taken as the current pre-training task.

That is, each model parameter update is performing a specific pre-training task, which is called a current pre-training task for ease of description. A corresponding loss function may be obtained according to inputted training data, and then model parameters corresponding to the current pre-training task may be updated according to the obtained loss function.

For example, a current pre-training task corresponding to a certain round of training is the task of judging matching between a question "whether the table can answer the question" and a data source. A loss function corresponding to the task may be obtained according to inputted training data, and then model parameters corresponding to the task may be updated according to the obtained loss function. In another example, a current pre-training task corresponding to next round of training is a multi-mode pre-training task "whether a text matches a video". A loss function corresponding to the task may be obtained according to inputted training data, and then model parameters corresponding to the task may be updated according to the obtained loss function.

How to acquire training data corresponding to different pre-training tasks is not limited. For example, the training data may be generated manually or automatically annotated, or automatically acquired from large-scale network data.

A pre-training task corresponding to each round of training is not limited. For example, assuming that a total of 8 pre-training tasks exist in the pre-training task set, which are called pre-training tasks 1 to 8 respectively for ease of description, a pre-training task corresponding to a 1^{st} round of training may be the pre-training task 1, a pre-training task corresponding to a 2^{nd} round of training may be the pre-training task 2, a pre-training task corresponding to a 3^{rd} round of training may be the pre-training task 3, ..., a pre-training task corresponding to an 8^{th} round of training may be the pre-training task 8, a pre-training task corresponding to a 9^{th} round of training may be the pre-training task 1, a pre-training task corresponding to a 10^{th} round of training may be the pre-training task 2, and so on. The pre-training tasks may be performed cyclically, until the model converges.

How to acquire a loss function and how to update the model parameters according to the loss function are prior arts. In addition, the specific form of the loss function is not limited, which may be, for example, a cross entropy, a Cartesian distance, a cosine distance or a mean square error.

In one embodiment of the present disclosure, when a loss function corresponding to the current pre-training task is acquired, L loss functions corresponding to the current pre-training task may be acquired, L being a positive integer. Correspondingly, when L is greater than 1, a comprehensive loss function may be determined according to the L loss functions, and the model parameters corresponding to the current pre-training task are updated according to the comprehensive loss function.

For example, the current pre-training task corresponds to 3 loss functions, which are called a loss function 1, a loss function 2 and a loss function 3 respectively for ease of description, the 3 loss functions may be weighted and summed, and a weighted summation result is taken as a comprehensive loss function. Different loss functions may correspond to a same weight or different weights.

With the above method, a required pre-trained model can be trained rapidly and efficiently, and a model effect of the pre-trained model can be ensured.

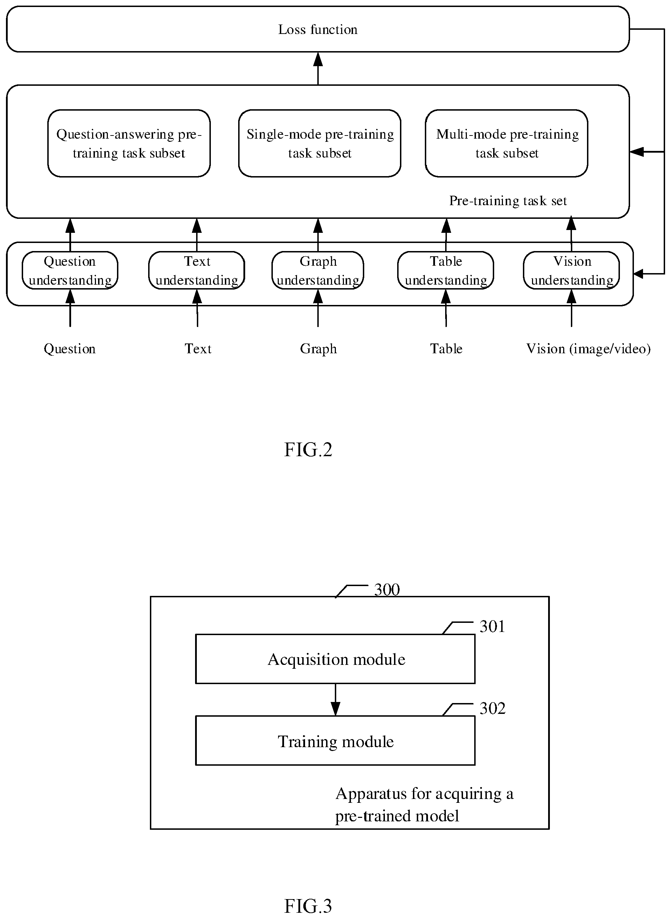

Based on the above introduction, FIG. 2 is a schematic diagram of a pre-training architecture of the pre-trained model according to the present disclosure.

As shown in FIG. 2, the input may be a question, a text, a graph, a table, vision (an image or a video), or the like. The specific input content may be determined according to actual requirements.

As shown in FIG. 2, corresponding neural network encoder architectures may be used for question understanding, text understanding, graph understanding, table understanding and vision understanding modules respectively. The neural network encoder architectures corresponding to any two different modules may be the same or different.

As shown in FIG. 2, the pre-training task set may include: a question-answering pre-training task subset, a single-mode pre-training task subset and a multi-mode pre-training task subset. The question-answering pre-training task subset may include: a plurality of question-answering tasks, a task of judging matching between a question and a data source, a task of detecting a part related to the question in the data source, and a task of judging validity of the question and/or the data source. The single-mode pre-training task subset may include at least one single-mode pre-training task. The multi-mode pre-training task subset may include at least one multi-mode pre-training task.

As shown in FIG. 2, in each round of training, the pre-training task corresponding to the round of training may be determined as a current pre-training task, a loss function corresponding to the current pre-training task may be acquired, and then model parameters corresponding to the current pre-training task may be updated according to the loss function.

It is to be noted that, to make the description brief, the foregoing method embodiments are expressed as a series of actions. However, those skilled in the art should appreciate that the present disclosure is not limited to the described action sequence, because, according to the present disclosure, some steps may be performed in other sequences or performed simultaneously. In addition, those skilled in the art should also appreciate that all the embodiments described in the specification are preferred embodiments, and the related actions and modules are not necessarily mandatory to the present disclosure.

The above is the introduction to the method embodiments. The following is a further illustration of the solutions of the present disclosure through apparatus embodiments.

FIG. 3 is a schematic diagram of a component structure of an embodiment of an apparatus 300 for acquiring a pre-trained model according to the present disclosure. As shown in FIG. 3, the apparatus includes: an acquisition module 301 and a training module 302.

The acquisition module 301 is configured to acquire a pre-training task set composed of M pre-training tasks, M being a positive integer greater than 1, the pre-training tasks including: N question-answering tasks corresponding to different question-answering forms, N being a positive integer greater than 1 and less than or equal to M.

The training module 302 is configured to jointly pre-train the pre-trained model according to the M pre-training tasks.

In order to pre-train the pre-trained model, the acquisition module 301 may acquire a pre-training task set composed of M pre-training tasks first, M being a positive integer greater than 1. The pre-training tasks may include: N question-answering tasks corresponding to different question-answering forms, N being a positive integer greater than 1 and less than or equal to M.

Specific values of M and N may be determined according to actual requirements. If N is equal to M, it indicates that the pre-training task set includes only N question-answering tasks. If N is less than M, it indicates that the pre-training task set includes at least one other tasks in addition to the N question-answering tasks.

For example, the value of N may be 5. Correspondingly, 5 question-answering tasks may include: a text question-answering task, a knowledge-based question-answering task, a table question-answering task, an image question-answering task and a video question-answering task.

In one embodiment of the present disclosure, the pre-training task set may include: a question-answering pre-training task subset; and the question-answering pre-training task subset may include: the N question-answering tasks, and may further include one or any combination of the following: a task of judging matching between a question and a data source, a task of detecting a part related to the question in the data source, and a task of judging validity of the question and/or the data source.

As can be seen, the tasks in the question-answering pre-training task subset are all question-answering-related pre-training tasks. The task of judging matching between a question and a data source is configured to judge whether a given data source such as a text, a knowledge graph, a table, an image, or a video can answer a given question. The task of detecting a part related to the question in the data source is configured to identify a part that can answer the question in a given data source. The task of judging validity of the question and/or the data source is configured to judge whether a given question is a valid information acquisition question, and/or judge whether a given data source can support an information acquisition question.

In one embodiment of the present disclosure, the pre-training task set may further include one or all of the following: a single-mode pre-training task subset and a multi-mode pre-training task subset. The single-mode pre-training task subset may include: P different single-mode pre-training tasks, P being a positive integer; and the multi-mode pre-training task subset may include: Q different multi-mode pre-training tasks, Q being a positive integer. Specific values of P and Q may be determined according to actual requirements.

The single-mode pre-training task and the multi-mode pre-training task generally refer to common pre-training tasks in the existing pre-training work. Specific single-mode pre-training tasks and/or multi-mode pre-training tasks may be determined according to actual requirements. For example, the single-mode pre-training task may be "predict occluded columns according to reserved columns" or the like, and the multi-mode pre-training task may be "whether a text matches a video" or the like.

The training module 302 may pre-train the pre-trained model based on the pre-training task set. In the method of the present disclosure, a learning process of the pre-trained model may be performed asynchronously.

In one embodiment of the present disclosure, the training module 302 may perform the following processing respectively in each round of training: determining the pre-training task corresponding to the round of training as a current pre-training task; acquiring a loss function corresponding to the current pre-training task; and updating model parameters corresponding to the current pre-training task according to the loss function; wherein each of the M pre-training tasks is taken as the current pre-training task.

That is, each model parameter update is performing a specific pre-training task, which is called a current pre-training task for ease of description. A corresponding loss function may be obtained according to inputted training data, and then model parameters corresponding to the current pre-training task may be updated according to the obtained loss function.

A pre-training task corresponding to each round of training is not limited. For example, assuming that a total of 8 pre-training tasks exist in the pre-training task set, which are called pre-training tasks 1 to 8 respectively for ease of description, a pre-training task corresponding to a 1^{st} round of training may be the pre-training task 1, a pre-training task corresponding to a 2^{nd} round of training may be the pre-training task 2, a pre-training task corresponding to a 3^{rd} round of training may be the pre-training task 3, ..., a pre-training task corresponding to an 8^{th} round of training may be the pre-training task 8, a pre-training task corresponding to a 9^{th} round of training may be the pre-training task 1, a pre-training task corresponding to a 10^{th} round of training may be the pre-training task 2, and so on. The pre-training tasks may be performed cyclically, until the model converges.

In one embodiment of the present disclosure, when acquiring a loss function corresponding to the current pre-training task, the training module 302 may acquire L loss functions corresponding to the current pre-training task, L being a positive integer. Correspondingly, when L is greater than 1, a comprehensive loss function may be determined according to the L loss functions, and the model parameters corresponding to the current pre-training task are updated according to the comprehensive loss function.

For example, the current pre-training task corresponds to 3 loss functions, which are called a loss function 1, a loss function 2 and a loss function 3 respectively for ease of description, the 3 loss functions may be weighted and summed, and a weighted summation result is taken as a comprehensive loss function. Different loss functions may correspond to a same weight or different weights.

The specific work flow of the apparatus embodiment shown in FIG. 3 may be obtained with reference to the related description in the above method embodiment, which is not described in detail.

In conclusion, by use of the solution of the apparatus embodiment of the present disclosure, a plurality of different question-answering forms may be pre-trained in a same framework, that is, joint pre-training of different question-answering forms is realized, so that a pre-trained model applied to different question-answering forms can be obtained, thereby reducing resource consumption and saving time costs.

The solutions of the present disclosure may be applied to the field of artificial intelligence, and in particular, to the fields such as deep learning, natural language processing, knowledge graph and intelligent voice. Artificial intelligence is a discipline that studies how to make computers simulate certain thinking processes and intelligent behaviors (such as learning, reasoning, thinking and planning) of human beings, which includes hardware technologies and software technologies. The artificial intelligence hardware technologies generally include sensors, dedicated artificial intelligence chips, cloud computing, distributed storage, big data processing and other technologies. The artificial intelligence software technologies mainly include a computer vision technology, a speech recognition technology, a natural language processing technology, machine learning/deep learning, a big data processing technology, a knowledge graph technology and other major directions.

Acquisition, storage and application of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

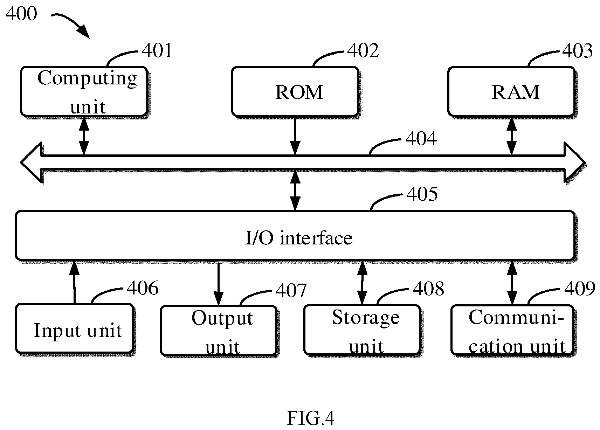

FIG. 4 is a schematic block diagram of an exemplary electronic device 400 configured to implement embodiments of the present disclosure. The electronic device is intended to represent various forms of digital computers, such as laptops, desktops, workbenches, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 4, the device 400 includes a computing unit 401, which may perform various suitable actions and processing according to a computer program stored in a read-only memory (ROM) 402 or a computer program loaded from a storage unit 408 into a random access memory (RAM) 403. The RAM 403 may also store various programs and data required to operate the device 400. The computing unit 401, the ROM 402 and the RAM 403 are connected to one another by a bus 404. An input/output (I/O) interface 405 may also be connected to the bus 404.

A plurality of components in the device 400 are connected to the I/O interface 405, including an input unit 406, such as a keyboard and a mouse; an output unit 407, such as various displays and speakers; a storage unit 408, such as disks and discs; and a communication unit 409, such as a network card, a modem and a wireless communication transceiver. The communication unit 409 allows the device 400 to exchange information/data with other devices over computer networks such as the Internet and/or various telecommunications networks.

The computing unit 401 may be a variety of general-purpose and/or special-purpose processing components with processing and computing capabilities. Some examples of the computing unit 401 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 401 performs the methods and processing described above, such as the method described in the present disclosure. For example, in some embodiments, the method described in the present disclosure may be implemented as a computer software program that is tangibly embodied in a machine-readable medium, such as the storage unit 408. In some embodiments, part or all of a computer program may be loaded and/or installed on the device 400 via the ROM 402 and/or the communication unit 409. One or more steps of the method described in the present disclosure may be performed when the computer program is loaded into the RAM 403 and executed by the computing unit 401. Alternatively, in other embodiments, the computing unit 401 may be configured to perform the method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A method for acquiring a pre-trained model, comprising:
acquiring (101) a pre-training task set composed of M pre-training tasks, M being a positive integer greater than 1, the pre-training tasks comprising: N question-answering tasks corresponding to different question-answering forms, N being a positive integer greater than 1 and less than or equal to M; and
jointly (102) pre-training the pre-trained model according to the M pre-training tasks.

2. The method according to claim 1, wherein the step of jointly pre-training the pre-trained model according to the M pre-training tasks comprises:
performing the following processing respectively in each round of training:
determining the pre-training task corresponding to the round of training as a current pre-training task;
acquiring a loss function corresponding to the current pre-training task; and
updating model parameters corresponding to the current pre-training task according to the loss function;
wherein each of the M pre-training tasks is taken as the current pre-training task.

3. The method according to claim 2, wherein
the step of acquiring a loss function corresponding to the current pre-training task comprises: acquiring L loss functions corresponding to the current pre-training task, L being a positive integer; and
when L is greater than 1, the step of updating model parameters corresponding to the current pre-training task according to the loss function comprises: determining a comprehensive loss function according to the L loss functions, and updating the model parameters corresponding to the current pre-training task according to the comprehensive loss function.

4. The method according to claim 1, wherein
the pre-training task set comprises: a question-answering pre-training task subset; and
the question-answering pre-training task subset comprises: the N question-answering tasks, and one or any combination of the following: a task of judging matching between a question and a data source, a task of detecting a part related to the question in the data source, and a task of judging validity of the question and/or the data source.

5. The method according to any one of claims 1 to 4, wherein
the pre-training task set further comprises one or all of the following: a single-mode pre-training task subset and a multi-mode pre-training task subset; and
the single-mode pre-training task subset comprises: P different single-mode pre-training tasks, P being a positive integer; and the multi-mode pre-training task subset comprises: Q different multi-mode pre-training tasks, Q being a positive integer.

6. An apparatus (300) for acquiring a pre-trained model, the apparatus comprising: an acquisition module (301) and a training module (302);
the acquisition module (301) being configured to acquire a pre-training task set composed of M pre-training tasks, M being a positive integer greater than 1, the pre-training tasks comprising: N question-answering tasks corresponding to different question-answering forms, N being a positive integer greater than 1 and less than or equal to M; and
the training module (302) being configured to jointly pre-train the pre-trained model according to the M pre-training tasks.

7. The apparatus (300) according to claim 6, wherein
the training module (302) performs the following processing respectively in each round of training: determining the pre-training task corresponding to the round of training as a current pre-training task; acquiring a loss function corresponding to the current pre-training task; and updating model parameters corresponding to the current pre-training task according to the loss function; wherein each of the M pre-training tasks is taken as the current pre-training task.

8. The apparatus (300) according to claim 7, wherein
the training module (302) acquires L loss functions corresponding to the current pre-training task, L being a positive integer; and when L is greater than 1, determines a comprehensive loss function according to the L loss functions, and updates the model parameters corresponding to the current pre-training task according to the comprehensive loss function.

9. The apparatus (300) according to claim 6, wherein
the pre-training task set comprises: a question-answering pre-training task subset; and
the question-answering pre-training task subset comprises: the N question-answering tasks, and one or any combination of the following: a task of judging matching between a question and a data source, a task of detecting a part related to the question in the data source, and a task of judging validity of the question and/or the data source.

10. The apparatus (300) according to any one of claims 6 to 9, wherein
the pre-training task set further comprises one or all of the following: a single-mode pre-training task subset and a multi-mode pre-training task subset; and
the single-mode pre-training task subset comprises: P different single-mode pre-training tasks, P being a positive integer; and the multi-mode pre-training task subset comprises: Q different multi-mode pre-training tasks, Q being a positive integer.

11. An electronic device, comprising:
at least one processor; and
a memory in communication connection with the at least one processor; wherein
the memory stores instructions executable by the at least one processor, and the instructions are executed by the at least one processor to enable the at least one processor to perform the method according to any one of claims 1 to 5.

12. A non-transitory computer-readable storage medium storing computer instructions, wherein the computer instructions are configured to cause a computer to perform the method according to any one of claims 1 to 5.

13. A computer program product, comprising a computer program, wherein, when the computer program is executed by a processor, the method according to any one of claims 1 to 5 is performed.
